# EUROPÄISCHE PATENTSCHRIFT

(11) **EP 1 564 858 B1**
(45) Veröffentlichungstag und Bekanntmachung des Hinweises auf die Patenterteilung: **08.08.2007**
(21) Anmeldenummer: 04024448.5
(22) Anmeldetag: 14.10.2004
(51) Int. Cl.: H02G 3/08, H01R 4/24

(54) **Abzweigbox**
Branching box
Boîte de dérivation

(30) Priorität: 17.02.2004 DE 102004007525
(43) Veröffentlichungstag der Anmeldung: 17.08.2005
(73) Patentinhaber: R. Stahl Schaltgeräte GmbH, 74638 Waldenburg (DE)
(72) Erfinder: Würz, Helmut, 74676 Niedernhall (DE); Limbacher, Bernd, 74523 Schwäbisch Hall (DE)
(74) Vertreter: Rüger, Barthelt & Abel Patentanwälte

(56) Entgegenhaltungen:
- EP-A- 1 178 571
- WO-A-20/04001905
- GB-A- 2 348 056
- US-B1- 6 299 472

## Beschreibung

Eine elektrische Funkenbildung kann in Bereichen, in denen mit einer gewissen Wahrscheinlichkeit mit einem zündfähigen Gasgemisch zu rechnen ist zu einer Explosion oder Detonation führen. Es gibt deswegen besondere Schutzvorschriften, deren Zweck darin besteht, solche Gefahrenquellen auszuschließen. Hierzu gehört unter anderem die Vorschrift, dass an stromführenden oder unter Spannung stehenden Kreisen in aller Regel nicht manipuliert werden darf, wenn die Werte von Strom und Spannung oberhalb von kritischen Grenzwerten liegen, die nicht die Zündschutzart "eigensicher" erfüllen.

Netzleitungen erfüllen diese Vorschrift nicht, weshalb Verdrahtungsarbeitungen an Netzleitungen nur durchgeführt werden dürfen, wenn die betreffende Netzleitung spannungsfrei ist.

Hier entsteht ein gewisses Problem, weil von Zeit zu Zeit Steckdosen nachgerüstet werden müssen. Bislang hat dies erfordert den entsprechenden Strang, an dem die Netzleitung hängt, die mit einer zusätzlichen Steckdose versehen werden soll, insgesamt spannungslos zu machen. Häufig wird dadurch nicht nur die betreffende Netzleitung abgeschaltet sondern auch andere Stromzuführungen, wodurch der Anlagenbetrieb erheblich beeinträchtigt wird.

Die EP 1 178 571 A2 beschreibt eine Vorrichtung die dazu dient, eine Abzweigleitung an eine durchgehende Netzleitung anzuschließen, ohne dass die Hauptleitung spannungslos gestaltet werden muss.

Zu der Anordnung gehört ein Träger, der für jeden Leiterkontakt ein Schneidkontaktpaar aufweist, dessen beiden Schneidkontakte galvanisch miteinander verbunden sind.

Ferner umfasst die Anordnung ein Gehäuse, das badagenartig den Träger und die beiden Leitungen an einer Kontaktstelle umfasst.

Zum Kontaktieren wird der Träger mit den Schneidkontakten zwischen den Leitungen platziert. Sodann wird das Gehäuse herum gelegt und zusammengedrückt. Beim Zusammendrücken schneiden die Schneidkontakte durch die äußere Ummantelung und die einzelnen Aderisolationen hindurch, um in die Litze der Leitung einzudringen und den gewünschten galvanischen Kontakt herzustellen.

Aus derselben Druckschrift ist eine weitere Art von Kontaktierung bekannt, bei der ein Schneidklemmschlitz verwendet wird. Die zu kontaktierende Ader wird mit einem Werkzeug in den Schneidklemmkontakt eingedrückt, wobei die Schneiden die Adernisolation durchdringen und mit Ihren Schneiden Kontakt an der eingezwängten Litze machen. Mittels desselben Werkzeugs werden schließlich die Enden des Schneidklemmkontaktes, die über die Litze überstehen, aufeinander zu gebogen, womit die Litze schlussendlich allseitig umschlossen ist.

Für eine Anwendung im explosionsgeschützten Bereich ist keine dieser bekannten Anordnungen geeignet, da es keine Vorkehrungen gibt, um bei der Kontaktierung elektrische Funken mit Sicherheit zu verhindern.

Ausgehend hiervon ist es Aufgabe der Erfindung eine Abzweigbox zu schaffen, die auch bei spannungsführender Netzleitung installiert werden kann.

Diese Aufgabe wird erfindungsgemäß mittels einer Abzweigbox mit den Merkmalen des Anspruches 1 gelöst.

Die neue Abzweigbox setzt sich aus zwei schalenförmigen Gehäusehälften oder Teilen zusammen, von denen jeder einen Boden und einen umlaufenden Rand aufweist. Die beiden Ränder liegen mit ihren freien Kanten im montierten Zustand dicht aufeinander, so dass ein Eindringen von Fremdkörpern in den Innenraum wirksam vermieden ist.

Nach dem Montieren der beiden Gehäusehälften erfüllt der Fügespalt der beiden Gehäusehälften die Schutzart IP 54.

In den Rändern der beiden schalenförmigen Gehäusehälften, befinden sich diametral gegenüber mehrere halbkreisförmige Öffnungen, durch die ein ungeschnittenes Netzkabel bzw. eine ungeschnittene mehradrige Netzleitung durch das Gehäuse hindurchgeführt werden kann.

Ein Kontaktieren der Einzeladern durch die Schneidklemmkontakte ist solange vollkommen ungefährlich, wie über die Schneidklemmkontakte kein Strom fließt, während die Kontaktierung erfolgt. Es kann deswegen gefahrlos die Kontaktierung erfolgen, wenn sichergestellt ist, dass kein Stromverbraucher an die Abzweigbox angeschlossen ist. Um die Stromlosigkeit der Schneidklemmkontakte während des Kontaktierens in jedem Falle sicherzustellen, ist eine Sperreinrichtung vorgesehen, die ein Einstecken des Steckers so lange blockiert, bis der Schneidklemmkontakt sicher an der Einzelader sitzt.

Je nachdem an welcher Stelle sich die Steckverbinder in Gestalt von Steckdosen befinden, befinden sich die Ränder der Seitenwände auf derselben Höhe, oder aber eine der Seitenwände eines der beiden Gehäusehälften ist mit einer Aussparung versehen, in der eine Verlängerung der Seitenwand der anderen Gehäusehälfte hineinragt.

Wie bereits erwähnt sind die Kabeleinführungseinrichtungen zweckmäßigerweise durch halbkreisförmige Ausnehmungen gebildet, die derart gestaltet sind, dass sie bei geschlossener Abzweigbox zu einer im wesentlichen zylindrischen Bohrung einander ergänzen.

Im Bereich der Kabeleinführungseinrichtungen kann die Seitenwand verstärkt sein, um hier Dichtungen, die nach Art einer Bundbuchse ausgebildet sind, oder auch Zugentlastungseinrichtungen hier unterzubringen.

Die Adernfixiereinrichtung weist je Einzelader zweckmäßigerweise zwei parallel nebeneinander vom Boden aufragende Rippen auf, deren Abstand an den Durchmesser der isolierten Einzelader angepasst ist, die in radialer Richtung praktisch nicht mehr ausweichen kann. Die Rippen sind parallel zu einer Verbindungsgeraden ausgerichtet, auf der die beiden Aderneinführungseinrichtungen liegen.

Zu jeder Adernfixiereinrichtung gehört ein Deckel, der auf den Rippen verrastbar ist. Dabei sorgt eine Zentriereinrichtung für ein lagerichtiges Halten des Deckels. Der Deckel verhindert ein Herausspringen der Ader aus dem Raum zwischen den Rippen. Außerdem enthält jeder Deckel einen Schlitz, durch den ein Schneidklemmkontakt hindurch gelangen kann. Diese Schlitze dienen gleichzeitig als eine Art Präzisionsführung zum Reduzieren der Lagetoleranz der Schneidklemmkontakte beim Kontaktieren. Außerdem kann auf den einander gegenüberliegenden Seiten von zueinander gehörigen Rippen ein Führungskanal für den betreffenden Schneidklemmkontakt vorgesehen sein.

Die Schneidklemmkontakte sitzen vorteilhafterweise auf einer gemeinsamen Trägerplatte, die auch Kontaktierungseinrichtungen für Adern trägt, über die die Schneidklemmkontakte mit den einzelnen Steckverbindern der Steckdose verbunden sind.

Die Trägereinrichtung ist seitlich mit Rastnasen versehen, die nach dem Kontaktieren der Adern mit dem anderen Gehäuseteil unlösbar verrasten, beispielsweise an dort vorgesehenen Öffnungen oder Kanten.

Die Trägereinrichtung ist mit einem Führungsmittel versehen, dass mit einem Führungsmittel in dem Gehäuseteil zusammenwirkt.

Die Trägereinrichtung ist mit einem zentralen Stößel versehen, der durch eine Bohrung in dem betreffenden Gehäuseteil abgedichtet nach außen führt. Mit Hilfe dieses Stö-ßelteils kann die Trägereinrichtung mit den Schneidklemmkontakten in Richtung auf die fixierten Adern bewegt werden.

Mit Hilfe von Sicherungseinrichtungen kann dafür gesorgt werden, dass bei geöffnetem Gehäuse die Trägereinrichtung mit den Schneidklemmkontakten an einer Stelle fixiert ist, die mit Sicherheit gewährleistet, dass die Schneidklemmkontakte die Isolation der Einzeladern nicht beschädigen können.

Mit Hilfe einer Hilfsvorrichtung in Gestalt einer Auslösereinrichtung können diese Sicherheitseinrichtungen geöffnet werden, um die Bewegung der Trägerplatten mit den Schneidklemmkontakten frei zu geben. Die Hilfseinrichtung befindet sich in dem anderen Gehäuseteil. Eine Freigabe ist erst möglich, wenn die beiden Gehäuseteile miteinander verbunden sind.

Mit dem Stößel für die Trägerplatte ist eine Sperreinrichtung gekuppelt, die auf Grund ihrer Gestalt ein Einstecken von Steckern in die Steckbuchsen der Abzweigbox solange blockiert, bis die Scheidklemmkontakte mit den Adern zuverlässig elektrisch in Verbindung stehen.

Das Sperrglied kann einen auf einem Gehäuseteil geführten Schlitten umfassen, der sich in dieselbe Richtung wie der Stößel bewegt, wobei daran befindliche Ausleger in den Bewegungsbereich eines einzusteckenden Steckers ragen.

Eine andere Ausführungsform wirkt mit einem Schieber zusammen, der auf den Steckbuchsen geführt ist und dessen Ausweichen beim Einführen eines Steckers so lange verhindert, bis die Schneidklemmkontakte tatsächlich Kontakt machen.

Im Übrigen sind Weiterbildungen der Erfindungen Gegenstand von Unteransprüchen.

Beim Lesen der Figurenbeschreibung wird auch klar, dass eine Reihe von Abwandlungen möglich sind, ohne dass diese Abwandlung ausdrücklich erwähnt werden müssen.

In der Zeichnung sind Ausführungsbeispiele des Gegenstandes der Erfindung dargestellt. Es zeigen:
- Fig. 1: die erfindungsgemäße Abzweigbox in einer perspektivischen Darstellung,
- Fig. 2: die obere Gehäusehälfte der Abzweigbox nach Fig. 1, in einer perspektivischen Darstellung mit Blick auf das Innere,
- Fig. 3: einen Schnitt durch die obere Gehäusehälfte in der Ebene der Schneidklemmkontakte,
- Fig. 4: die untere Gehäusehälfte der Abzweigbox nach Fig. 1, in einer perspektivischen Darstellung mit Blick auf das Innere,
- Fig. 5: die Abzweigbox nach Fig. 1, geschnitten entsprechend der Darstellung nach Fig. 3, unter Veranschaulichung des Zustands vor dem Kontaktieren der Schneidklemmkontakte,
- Fig. 6: die Anordnung nach Fig. 5, in der Stellung nach dem Kontaktieren der Schneidklemmkontakte, und
- Fig. 7: eine Abzweigbox in einer perspektivischen Darstellung mit auf dem Boden der einen Gehäusehälfte angeordneten Steckbuchsen.

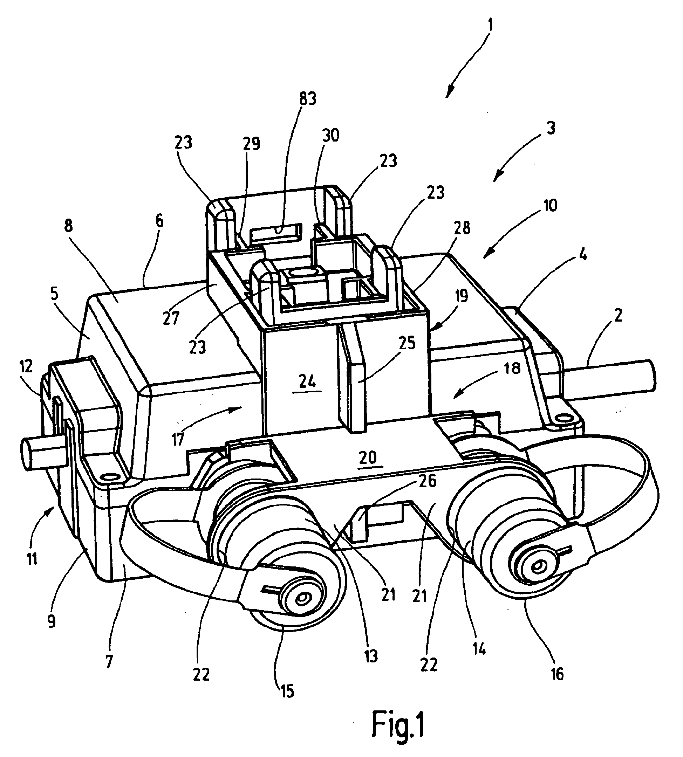

Fig. 1 zeigt eine erfindungsgemäße Abzweigbox 1, die unter Spannung an einem mehradrigen Netzleiter 2 zu montieren ist, der fest auf einer Struktur verlegt ist. Die Abzweigbox 1 ist in der Zündschutzart Ex-e ausgeführt. Sie weist ein etwa quaderförmiges Gehäuse 3 auf, das von zwei sich gegenüber liegenden kurzen Schmalseiten 4 und 5, durch die die Netzleitung 2 ungeschnitten hindurchführt, zwei sich gegenüber liegenden langen Schmalseiten 6 und 7, einer Oberseite 8 sowie einer Unterseite 9 begrenzt ist. Es setzt sich aus einer oberen Gehäusehälfte 10 und einer unteren Gehäusehälfte 11 zusammen. Eine Trennfuge 12 verläuft etwa durch die Mitte der Schmalseiten 4, 5 und 6.

Die Unterseite 9 ist jene Fläche, mit der die Abzweigbox 1 im montierten Zustand an der tragenden Struktur befestigt ist. Die Oberseite 8 zeigt von der tragenden Struktur weg. In diesem Sinne sind in der nachfolgenden Beschreibung die Bezeichnungen oben und unten verwendet, wobei diese Wortwahl lediglich aus Gründen der Vereinfachung gewählt ist.

An der langen Schmalseite 7 befinden sich zwei Steckdosen 13 und 14, die durch Schutzkappen 15 und 16 verschlossen sind. Die Steckdosen 13 und 14 haben eine längliche angenähert zylindrische Gestalt.

Eine Sperreinrichtung 17 dient dazu ein Einstecken eines Steckers zu verhindern, bis im Inneren der Abzeigbox 1 ein funkensicherer Kontakt mit den Adern des Nerzkabels 2 hergestellt ist. Die Art der Kontaktierung ist weiter unten noch im Einzelnen beschrieben.

Zu der Sperreinrichtung 17 gehört ein Sperrschiebera, der auf den Steckdosen in deren Axialrichtung geführt ist, sowie ein Steuerschieber 19.

Der Sperrschieber 18 setzt sich aus einer Brücke 20 und vier von der Brücke 20 ausgehenden Laschen 21 zusammen. Von denen wegen der Darstellung lediglich die dem Betrachter zugekehrten Laschen 21 zu erkennen sind. Die vorderen Laschen 21 enthalten Öffnungen 22, durch die die Steckdosen 13 bzw. 14 hindurch führen. Die hinteren Laschen 21 sind mit halbkreisförmigen Ausnehmungen auf dem Steckdosen 13, 14 geführt.

Der Sperrschieber 18 gestattet in der dargestellten Lage das Einstecken von entsprechenden Steckern in die Steckdosen 13 und 14. In seiner anderen Lage, in der er von der Schmalseite 7 weiter entfernt ist, wird dieses Einstecken durch die Laschen 21 verhindert.

Die Sperrstellung des Sperrschiebers 18 wird durch den Steuerschieber 19 gewährleistet, der an dem Gehäuse 3 geführt ist. Die Führung des Steuerschiebers 19 geschieht mit Hilfe von vier Zapfen 23, die an den Ecken eines Rechteckes angeordnet sind und aus der Oberseite 8 vorragen. Der Steuerschieber 19 weist eine Platte 24 auf, die neben der Schmalseite 7 verläuft und die zwei von dem Gehäuse 3 wegweisenden Leisten 25 und 26 trägt. Die Leisten 25 und 26 sind voneinander beabstandet. Dabei dient die untere Leiste 26, die leistenförmige Gestalt hat, als Anschlagleiste für die Brücke 20 des Sperrschiebers 18, wenn sich die Leiste 26 in einer weiter oben befindlichen Stellung befindet. Die obere Leiste 25 dient lediglich der Verstärkung der Platte 24.

Von der Platte 24 gehen zwei Schenkel 27 und 28 aus, die parallel zu der Oberseite 8 verlaufen und die beiden vorderen Zapfen 23, die dem Betrachter zugekehrt sind, au-ßen umgreifen. Die Schenkel 27 und 28 sind an der vom Betrachter abliegenden Seite mit abgekröpften Enden 29 und 30 versehen, die an den einander gegenüberliegenden Flachseiten der im Querschnitt etwa rechteckigen Zapfen 23 geführt sind.

Die beiden Schenkel 27 und 28 sind, wie sich aus den Schnittdarstellungen ergibt, durch eine weitere Verbindungsplatte 31 einstückig miteinander verbunden.

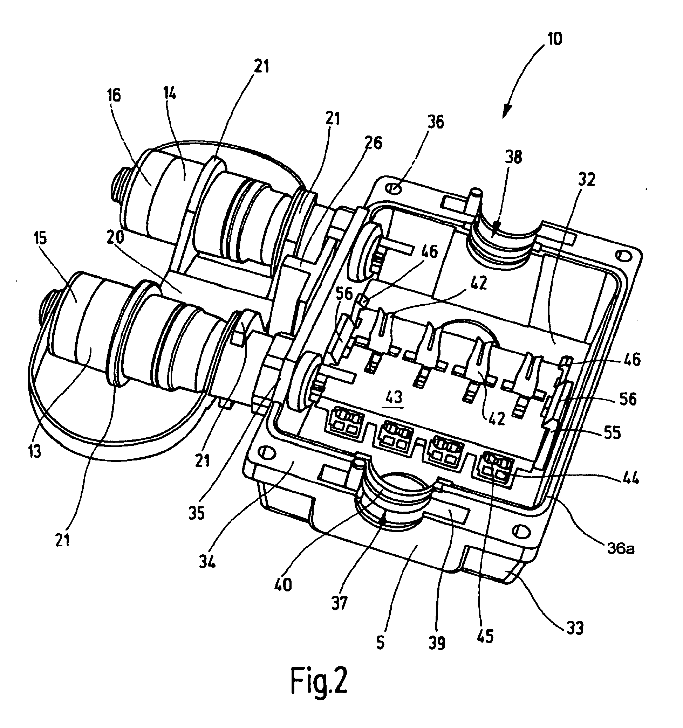

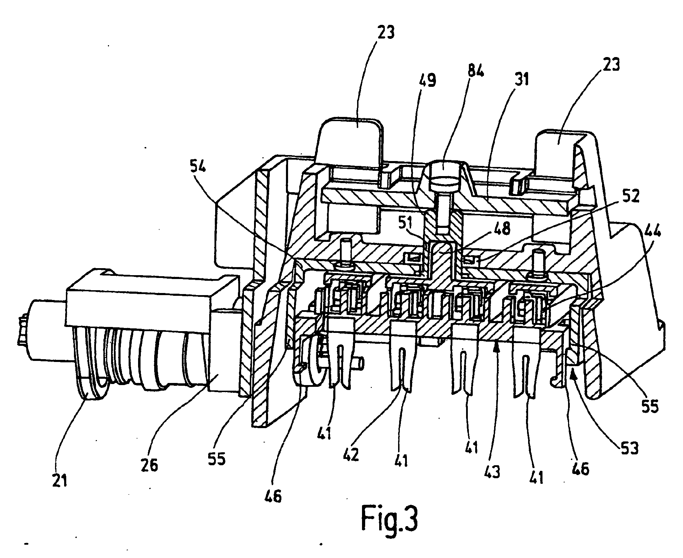

Der innere Aufbau der oberen Gehäusehälfte 10 wird nachstehend anhand der Fig. 2 und 3 erläutert.

Wie zu erkennen ist, setzt sich die obere Gehäusehälfte 10 aus einem im Wesentlichen ebenen Boden 32 und einer Seitenwandanordnung 33 zusammen, die etwa rechtwinklig aus dem Boden 32 vorsteht. Die Seitenwandanordnung 33 bildet am freien Rand eine Fügefläche 34 der Trennfuge 12. Dort wo die beiden Steckdosen 13 und 14 sich befinden, ist die Seitenwandanordnung 33 unter Ausbildung einer vorstehenden Lasche 35 in Richtung auf die untere Gehäusehälfte 11 verlängert.

Die Fügeflläche 34 ist Fläche eines nach außen ragenden Flansches und enthält Befestigungsbohrungen 36 zur Aufnahme von Schrauben, die in die untere Gehäusehälfte 11 eingedreht werden. Diese Bohrungen 36 befinden sich in den Ecken der etwa rechteckig verlaufenden Fügefläche 34.

Eine Nut 36a, die der Aufnahme einer Dichtschnur dient, befindet sich in der Fügefläche 34 neben dem Innenraum der oberen Gehäusehälfte 10.

Die Einführungöffnungen für das Kabel 2 werden in der oberen Gehäusehälfte 10 von zwei sich diametral gegenüberliegenden halbkreisförmigen Ausnehmungen 37 und 38 gebildet. Im Bereich der halbkreisförmigen Ausnehmungen 37 und 38 ist die Seitenwandanordnung 33 in der kurzen Schmalseite 4, 5 verstärkt, um dort Platz zu schaffen für Aufnahmenuten 39 und 40.

In dem von der oberen Gehäusehälfte 10 umgrenzten Raum befindet sich, wie die Fig. 2 und 3 zeigen, eine Gruppe aus insgesamt vier Schneidklemmkontakten 41, um ein dreipoliges Netzkabel mit Schutzleiter kontaktieren zu können. Die Schneidklemmkontakte 41 sind voneinander isoliert und in der üblichen Weise ausgeführt, d.h. sie bestehen aus einem ca. 0,7 mm starken Messingblechzuschnitt mit einem in Längsrichtung verlaufenden Klemmschlitz 42. Die Schneidklemmkontakte 41 liegen mit ihren Flachseiten in einer gemeinsamen Ebene und zeigen mit dem offenen Ende ihres Schneidklemmschlitzes 42 in Richtung auf die untere Gehäusehälfte 11.

Die Schneidklemmkontakte 41 sind in einem aus Isolierstoff bestehenden Halter 43 verankert, dessen Unterseite plan ist. An seiner Oberseite ist der in der Draufsicht etwa rechteckförmige Halter 43 mit Aufnahmeräumen 44 versehen, in denen nicht weitere erkennbare Käfigfedern sitzen. Dabei ist jedem Schneidklemmkontakt 41 ein solcher Aufnahmeraum 44 für zugehörige Käfigfedern zugeordnet. Die Käfigzugfedern dienen als Kontaktmittel für isolierte Litzendrähte, um die elektrische Verbindung zwischen einer Steckbuchse der betreffenden Steckdose 13, 14 mit dem zugehörigen Schneidklemmkontakt 41 herzustellen. Die hierfür erforderlichen Litzendrähte sind der Übersichtlichkeit halber in den Figuren nicht gezeigt. Es sind in Fig. 2 lediglich die Einstecköffnungen 45 zu erkennen, die zu den in dem Halter 43 befindlichen Käfigzugfedern führen.

Von jeder seitlichen Kante der planen Unterseite des Halters 43, geht ein nach unten führender Haken 46 aus, der, wie später noch erläutert wird, der dauerhaften Verriegelung des Halters 43 in der Kontaktstellung dienen.

An der Oberseite ist der Halter etwa in der Mitte zwischen den mittleren beiden Aufnahmeräumen 44 mit einem zylindrischen Fortsatz 48 versehen, auf dem ein Stößelstück 49 lose steckt, das durch eine Bohrung 51 in dem Boden 32 nach außen führt. Das Stößelstück 49 ist in der Bohrung 51 durch eine Dichtung 52 abgedichtet, um die gewünschte Schutzart aufrecht zu erhalten.

Zwischen dem Halter 43 und der Innenseite des Bodens 32, ist ein bügelartiges Sicherungsglied 53 befestigt, das sich aus einem Rückenteil 54 und zwei zueinander parallelen Schenkeln 55 zusammensetzt, die an ihrem freien Ende mit Haken versehen sind. Die Haken 56 sind in der Fig. 2 zu erkennen.

Das Sicherungsglied 53 ist mit dem geraden Rückenteil 54 an der Innenseite des Bodens 32 festgeschraubt. Durch die Mitte des Rückenteils 54 führt durch eine entsprechende Bohrung das Stößelstück 49 hindurch.

Mit Hilfe des Stößelstücks 49 ist der Halter 43 starr mit der Platte 31 verbunden. Dazu ist die Platte 31 des Steuerschiebers 19 mittels einer Schraube mit dem Stößelstück 49, wie gezeigt, verschraubt.

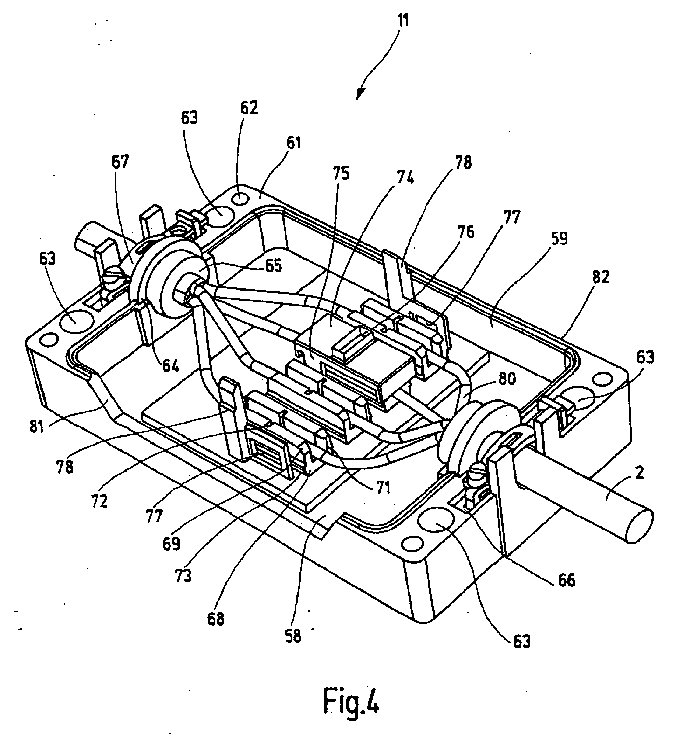

### Den Aufbau der unteren Gehäusehälfte zeigt Fig. 4

Die untere Gehäusehälfte 11 besteht ebenfalls aus einem Boden 58, der im Wesentlichen plan ist und von dem eine Seitenwandanordnung 59 aufragt. Mit dem Boden 58 liegt die Abzweigbox 1 auf der jeweiligen Gebäudestruktur auf. Die vom Betrachter abgekehrte Unterseite des Bodens 58 bildet die Unterseite 7.

Die Seitenwandanordnungen 59 endet an einer Fügefläche 61, die zu der Fügefläche 34 komplementär ist. Sie enthält in den Ecken bei 62 Gewindelöcher für Schrauben, die durch die Bohrungen 36 hindurch führen, und sie enthält außerdem in den kurzen Schmalseiten 4 und 5 Stufenbohrungen 63 für Befestigungsschrauben, um die untere Gehäusehälfte 11 auf der tragenden Struktur fest zu schrauben.

Die kurzen Schmalseiten 4, 5 sind in der unteren Gehäusehälfte 11 ebenfalls verstärkt und sie enthalten dort halbkreisförmige Ausnehmungen, die, zusammen mit den halbkreisförmigen Ausnehmungen 37 und 38, zylindrische Bohrungen bilden. Zum Inneren hin enthält jede halbkreisförmige Ausnehmung ein Nut 64, die der Aufnahme einer als Bundbuchse ausgeführten Elastomerdichtung 65 dient. Der Bund der Dichtung 65 steckt in der Nut 64. Weiter nach außen hin gelegen befindet sich eine weitere Nut 66, in der eine Zugentlastung 67 angeordnet ist.

Die Zugentlastung 67 ist in der üblichen Form ausgeführt und braucht deswegen nicht erläutert zu werden.

Auf der Innenseite des Bodens 48 sind parallel nebeneinander insgesamt vier Führungseinrichtungen 68 angeordnet, von denen jede einer Ader der vierpoligen Netzleitung 2 zugeordnet ist. Jede Führungseinrichtung setzt sich aus zwei zueinander parallelen Rippen 69 und 71 zusammen, die zwischen sich eine parallelflankige und hinterschneidungsfreie Nut begrenzen, die an den Außendurchmesser der isolierten Einzelader angepasst ist. Etwa in der Mitte, bezogen auf die Längserstreckung, enthält jede der Rippen 69 und 71 zwei einander gegenüberstehende und sich in Richtung aufeinander zu öffnende Führungsnuten 72, deren Weite an die Dicke der Schneidklemmkontakte 41 angepasst ist. Die Führungsnuten 72 führen, bezogen auf die Darstellung, nach unten und laufen seitlich an der dazwischen durchlaufenden Einzelader vorbei.

Jede der Rippen 69, 71 ist an der Außenseite mit einer Rastleiste 73 versehen, die als Halteglied für einen Deckel 74 dient. Der Deckel 74 hat eine etwa schalenförmige Ge-. stalt, wobei von den seitlichen Rändern zwei Rasthaken 75 ausgehen, die mit den Rastleisten 73 verrastbar sind. In der Mitte enthält der Deckel eine sich nach oben trichterförmig erweiternde Öffnung 76, die im montierten Zustand mit den beiden Führungsnuten 72 fluchtet.

Die Führungsschlitze 42 liegen, wie gezeigt, in einer gemeinsamen Ebene, die auf der Innenseite des Bodens 58 senkrecht steht. Die Rippen der Zentriereinrichtungen 68 verlaufen in Richtung parallel zu den langen Schmalseiten 6 und 7 und enden alle auf gleicher Höhe, bezogen auf die Innenseite des Bodens 68.

Seitlich neben den beiden außen liegenden Zentriereinrichtungen 68 befinden sich zwei rechteckförmige Rastösen 77, die mit den bereits erwähnten Haken 46 zusammenwirken. Außerdem stehen neben den Rastösen 77 zwei Auslösestifte 78 nach oben in Richtung auf die obere Gehäusehälfte 10, die an ihrem freien Ende, wie gezeigt, nach außen hin abgeschrägt sind.

Die Handhabung der beschriebenen Abzweigbox 1 ist wie folgt:
Nach dem Ablösen der auf Putz verlegten Netzleitung 2 wird die Netzleitung über ein entsprechendes Stück abgemantelt, bis die Einzeladern 80, deren Isolation nach wie vor unbeschädigt ist, frei liegen. Sodann wird die unter Gehäusehälfte 11 in den Spalt zwischen tragender Wand und Netzkabel 2 eingeschoben und mit Hilfe von Schrauben, die in die Stufenbohrungen 63 eingeführt werden, festgeschraubt. Nachdem dies geschehen ist, werden die beiden Dichtungen 65, die an einer Stelle in Radial- und Axialrichtung geschnitten sind, auf das Netzkabel 2 von der Seite her aufgeschoben und in die zugehörigen Nuten 64 eingesetzt. Schließlich werden die beiden Zugentlastungen 67 über die noch nicht abisolierten Enden des Netzkabels 2 gelegt und in bekannter Weise festgeschraubt. Damit ist eine Situation erreicht, wie sie in Fig. 4 gezeigt ist. Die Einzeladern 80 werden nun jede für sich in die zugehörige Zentriereinrichtung 68 eingelegt. Dabei kann eine Farbcodierung der Zentriereinrichtungen 68 hilfreich sein, damit die Ader mit der richtigen Farbe auch in die richtige Zentriereinrichtung 68 gelangt. Die Einzeladern 80 werden somit jede für sich in einer eigenen Zentriereinrichtung 68 innerhalb der unteren Gehäusehälfte 11 ausgerichtet und zwischen dem zueinander gehörenden Rippen 69 und 71 seitlich festgeklemmt.

Als nächstes wird auf jede Zentriereinrichtung 68 der zugehörige Deckel 74 aufgesetzt und mit den Haken 75 hinten den beiden nach außen weisenden Rastleisten 73 jeder Zentriereinrichtung 68 verrastet. Nach dem Verrasten der insgesamt vier Deckel 74, sind die Einzeladern 80 vollständig gefesselt. Zur Seite können sie nicht ausweichen, weil sie hieran durch die beiden Rippen 69 und 71 fixiert sind, nach unten werden sie durch den Boden der zwischen diesen Rippen 69 und 71 begrenzte Nut und nach oben durch den Rand des aufgesetzten Deckels 74 gesichert.

Nachdem die Montage der unteren Gehäusehälfte 11 bis dahin abgeschlossen ist, wird die obere Gehäusehälfte 10 aufgesetzt. Die obere Gehäusehälfte 11 greift mit der Lasche 35 in eine entsprechende Aussparung 81 der Seitenwandanordnung 59 ein. Außerdem legt sich eine im Querschnitt etwa dreikantige Rippe 82, die auf der Fügefläche 61 vorgesehen ist, dichtend an die Gummischnur an, die in der Nut 36a enthalten ist.

Die aus der Fügefläche 61 nach oben vorstehenden Teile der Zugentlastungen 67 sowie der Dichtungen 65, findet in den Nuten 40 und den Nuten 39 Platz. Die obere Gehäusehälfte 10 wird, nachdem sie insoweit lagerichtig positioniert ist, mit Schrauben die durch die Löcher 36 hindurch führen und in die Gewindesacklöcher 62 eingedreht sind, befestigt.

Im Anlieferungszustand der oberen Gehäusehälfte 10 befindet sich der Träger oder Halter 43 in der oberen Stellung, in der die Haken 56 neben den Haken 46, wie in Fig. 3 angedeutet, an der Unterseite des Halters 43, verhakt sind. Die Verhakung ist so gestaltet, dass sie auch durch eine große Kraft, die auf die Platte 31 von außen ausgeübt wird, nicht gelöst werden kann. Dadurch wird sichergestellt, dass beim Aufsetzen der oberen Gehäusehälfte 10, wie sie oben erläutert ist, die Schneidklemmkontakte 41 sich in einer Position befinden, in der sie zwar ein Stück weit in die trichterförmige Öffnung 46 der Deckel 74 hineinragen, jedoch in einem entsprechend großen Abstand zu der Isolation der einzelnen Adern 80 stehen, damit auf keinen Fall eine galvanische Verbindung zwischen den Einzeladern 80 und den Schneidklemmkontakten 41 entstehen kann.

Mit dem lagerichtigen Aufsetzen der oberen Gehäusehälfte 10 auf die untere Gehäusehälfte 11, dringen gleichzeitig die Schneidklemmkontakte 41 ein Stück weit in die zugehörigen Öffnungen 76 der Deckel 74 ein. Das Einfädeln der Schneidklemmkontakte 41 in die Öffnungen 76 wird durch die trichterförmige Erweiterung begünstigt.

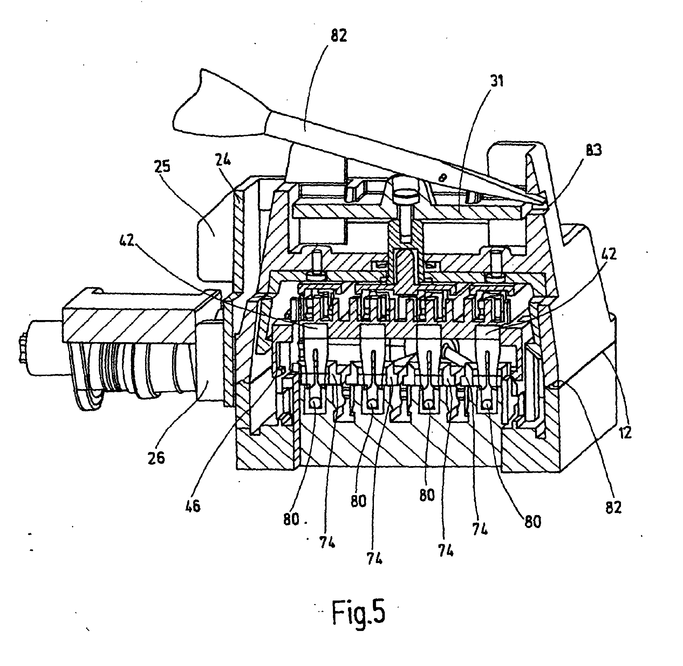

Nachdem die obere Gehäusehälfte 10 aufgesetzt und festgeschraubt ist, drängen die Auslösestifte 78, die sich seitlich zwischen den Halter 43 und die Haken 56 hineinzwängen, die Haken 56 nach außen- Dadurch wird die Verhakung zwischen den Haken 56 und dem Halter 43 gelöst. Diese Stellung der Haken 56 zeigt Fig. 5. Hier ist auch zu erkennen, wie die Schneidklemmkontakte sich im Abstand zu den Einzeladern 80 befinden, jedoch ein Stück weit in die Zentriereinrichtungen 68 eingedrungen sind.

Der Benutzer kann nunmehr, wie gezeigt, einen Schraubendreher 82 ansetzen, indem er dessen Klinge in eine Öffnung 83 einsteckt, die sich in einer Wand befindet, die die beiden hinteren Führungszapfen 23 (Fig. 1) miteinander verbindet. Der Schraubendreher 82 wirkt als Hebel und legt sich auf einem nach oben ragenden Fortsatz 84, der nach oben aus der Platte 31 vorsteht und durch den die Befestigungsschraube für den Halter hindurch führt, an. Durch Niederdrücken des Schraubendrehers 82 wird der aus der Verrastung mit dem Sicherungsglied 54 entriegelte Halter 43 samt den daran befindlichen Schneidklemmkontakten 41 nach unten in Richtung auf den Boden 58 der unteren Gehäusehälfte 11 gedrückt. Dabei durchschneiden in bekannter Weise die Schneidklemmkontakte 41 die Isolation der Einzeladern 80. Bei dieser Schneidoperation werden sie seitlich durch die Führungsnuten 72 geführt, um mit Sicherheit ein ausknicken oder ausweichen zu vermeiden.

Durch die Abwärsbewegung der Platte 31 mit samt dem Halter 43, wird auch der Steuerschieber 19 aus der Stellung nach den Fig. 3 und 4 nach unten in die Stellung nach Fig. 5 bewegt. In der Ausgangsstellung vor dem Kontaktieren befindet sich der Steuerschieber 19 in der oberen Stellung, in der die untere Rippe 26 zwischen der Schmalseite 7 und dem Sperrschieber 18 steht. Der Sperrschieber 18 verhindert in dieser Stellung mit Hilfe der Laschen 21, dass ein mehrpoliger Netzstecker in die Steckdosen 13 und 14 eingesteckt werden könnte. Erst nach dem Niederdrücken des Halters 43 und der sicheren Kontaktgabe zwischen den Schneidklemmkontakten 41 und den Einzeladern 80, befindet sich der Steuerschieber 19 in einer Stellung, in der die Rippe 26 nicht mehr ein Zurückdrücken des Sperrschiebers 18 in Richtung auf die Schmalseite 7 blockiert. Dadurch wird das Einstecken eines Steckers möglich.

Nachdem der Halter 43, bezogen auf die Darstellung der Figuren, nach unten gedrückt ist, verrasten die an dem Halter 43 vorgesehenen Haken 46 in den Rastösen 77.

Die Montage ist damit abgeschlossen und die Abzweigbox 1 kann, wie jede andere Steckdose im Ex-Bereich, verwendet werden.

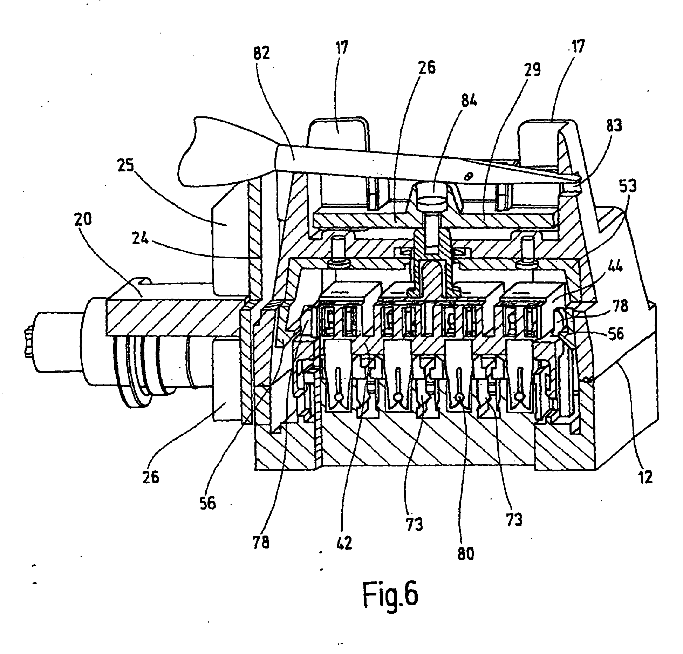

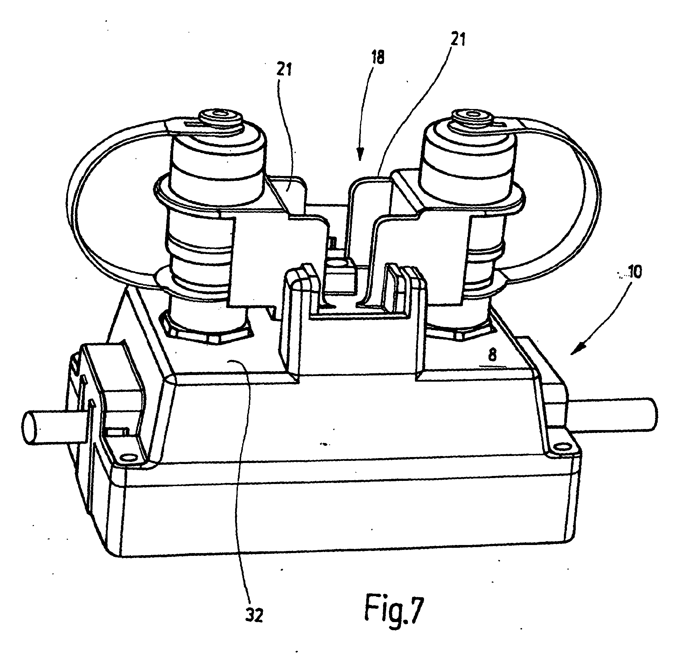

Die Abzweigbox nach Fig. 1 zeigt eine Anordnung, bei der die Steckdosen seitlich abgehen, d. h. bei einer Befestigung auf der Wand liegen die Steckdosen mit ihren Achsen zur Wand parallel. Fig. 7 zeigt eine Abzweigbox, bei der die Steckdosen 13 und 14 aus dem Boden 32 der oberen Gehäusehälfte 10, d.h. aus der Oberseite 8 vorstehen. Dementsprechend ist der Sperrschieber 18 unmittelbar mit der Platte 26 verbunden, wobei die Laschen 21 zu beiden Seiten zwischen den Führungszapfen 23 vorstehen und die Steckdosen 13 und 14 übergreifen. Bei der Kontaktierung der Einzeladern 80, wie dies oben beschrieben ist, bewegt sich der Sperrschieber 18 längs den beiden Steckdosen, bezogen auf Fig. 6, nach unten, so dass ein Einstecken der Stecker möglich ist, ohne das deren Schutzkragen an den Laschen 21 anstoßen kann.

Im Übrigen ist die Handhabung der Abzweigbox, wie zuvor, erläutert. Der innere Aufbau der Abzweigbox nach Fig. 7 unterscheidet sich ebenfalls nicht von dem, was Eingangs erläutert ist.

Eine Abzweigbox zum nachträglichen Installieren an einer Spannung führenden Netzleitung setzt sich aus zwei Gehäusehälften zusammen. Die wandseitige Gehäusehälfte enthält Zentriereinrichtungen für die isolierten Einzeladern des Netzkabels. Die andere Gehäusehälfte ist mit Steckdosen versehen und enthält in ihrem Inneren einen beweglich geführten Satz von gegeneinander isolierten Schneidklemmkontakten. Bei geschlossenem Gehäuse können die Schneidklemmkontakte von außen über ein Werkzeug mit den Einzeladern in eine stromleitende Verbindung gebracht werden. Solange die stromleitende Verbindung nicht hergestellt ist, verhindert ein Sperrschieber, dass Stecker an der Abzweigbox angesteckt werden können, womit zwangsläufig sichergestellt ist, dass das Kontaktieren der Schneidklemmkontakte im stromlosen Zustand erfolgt. Damit reicht für den Kontaktierungsvorgang und auch später im Betrieb, eine Schutzart der Abzweigbox nach IP 54 aus.

## Patentansprüche

1. Abzweigbox (1) in der Zündschutzart Ex-e,
mit einem zumindest angenähert schalenförmigen ersten Gehäuseteil (10,11), das einen Boden (32,58) und eine von dem Boden (32,58) aufragende Seitenwandanordnung (33,59) aufweist, die an einer Fügefläche (34,61) endet,
mit einem zumindest angenähert schalenförmigen zweiten Gehäuseteil (10,11), das einen Boden (32,58) und eine von dem Boden (32,58) aufragende Seitenwandanordnung (33,59) aufweist, die an einer Fügefläche (34,61) endet, die zu der Fügefläche (34,61) des anderen Gehäuseteils (10,11) komplementären verläuft, mit wenigstens zwei sich diametral gegenüberliegenden Kabeleinführungseinrichtungen (37,38), die an den beiden Gehäuseteilen (10,11) vorgesehen sind,
mit einer in einem der Gehäuseteile (10) beweglich geführten Trägereinrichtung (43) für wenigstens einen Schneidklemmkontakt (41), zum Kontaktieren einer Ader (80) eines durch die Abzweigbox (1) hindurchführenden Kabels (2),
mit wenigstens einer Steckdose (13,14) und
mit einer Sperreinrichtung (17), die kinematisch mit der Trägereinrichtung (43) gekoppelt ist und die abhängig von der Stellung der Trägereinrichtung (43) zwischen zwei Stellungen hin und her bewegbar ist, wobei sie in einer Stellung sich in dem Bewegungsweg eines in die Steckdose (13,14) einführbaren Steckers befindet und in der anderen Stellung außerhalb des Bewegungswegs des Steckers liegt.

2. Abzweigbox nach Anspruch 1, **dadurch gekennzeichnet, dass** die Böden (32,58) der beiden Gehäuseteile (10,11) im Wesentlichen an der Innenseite eben sind.

3. Abzweigbox nach Anspruch 1, **dadurch gekennzeichnet, dass** die Seitenwandanordnung (33) des einen Gehäuseteils (10) in einem Bereich in Richtung auf den anderen Gehäuseteil (11) verlängert ist, und dort in eine entsprechende Ausnehmung (81) der Seitenwandanordnung (59) hineinragt.

4. Abzweigbox nach Anspruch 1, **dadurch gekennzeichnet, dass** die Flügelfläche (34,61) der beiden Gehäuseteile (10,11) im Wesentlichen in einer gemeinsamen Ebene liegt.

5. Abzweigbox nach Anspruch 1, **dadurch gekennzeichnet, dass** die Flügelflächen (34,61) der beiden Gehäuseteile (10,11) derart gestaltet sind, dass bei zusammengesetzter Abzweigbox (1) die Flügelflächen (34,61) eine labyrinthartige Dichtung bilden, die den Innenraum der Abzweigbox (1) nach außen hin in der Schutzart IP 54 abdichten.

6. Abzweigbox nach Anspruch 1, **dadurch gekennzeichnet, dass** jede Kabeleinführungseinrichtung (37,38) eine halbkreisförmige Ausnehmung in der Seitenwandanordnung (33,59) umfasst.

7. Abzweigbox nach Anspruch 6, **dadurch gekennzeichnet, dass** die Seitenwandanordnung (33,59) im Bereich jeder Kabeleinführungseinrichtung (37,38) verstärkt ist derart, dass im Bereich der jeweiligen Kabeleinführungseinrichtung (37,38) in der Seitenwandanordnung (33,59) eine taschenförmige Ausnehmung (39,66) vorgesehen ist und dass in der taschenförmigen Ausnehmung (39,66) eine Zugentlastung (67) untergebracht ist.

8. Abzweigbox nach Anspruch 6, **dadurch gekennzeichnet, dass** zu der Kabeleinführungseinrichtung (37,38) eine Dichtung (65) gehört, die nach Art einer Bundbuchse ausgeführt ist und die an einer Stelle am Umfang geschnitten ist.

9. Abzweigbox nach Anspruch 1, **dadurch gekennzeichnet, dass** die Adernfixiereinrichtung (68,74) je Einzelader (80) zwei parallel nebeneinander vom Boden aufragende Rippen (69,71) umfasst, deren Abstand an den Durchmesser der insolierten Einzelader (80) angepasst ist.

10. Abzweigbox nach Anspruch 8, **dadurch gekennzeichnet, dass** die Rippen (69,71) parallel zu einer Verbindungsgeraden der beiden sich diametral gegenüberliegenden Kabeleinführungseinrichtungen (37,38) ausgerichtet ist.

11. Abzweigbox nach Anspruch 1, **dadurch gekennzeichnet, dass** zu der Adernfixiereinrichtung (68,74) ein Deckel (74) gehört, der mit den beiden Rippen (69,71) verrastbar ist und der eine Öffnung (76) zum Einführen eines SchneidKlemmkontaktes (41) aufweist.

12. Abzweigbox nach Anspruch 10, **dadurch gekennzeichnet, dass** der Deckel (74) einen umlaufenden Rand aufweist, der dazu eingerichtet ist, den Deckel (74) auf den beiden Rippen (69,71) zu zentrieren.

13. Abzweigbox nach Anspruch 9, **dadurch gekennzeichnet, dass** die Rippen (69,71) sich diametral gegenüberliegende Führungsschlitze (72) für den betreffenden SchneidKlemmkontakt (41) aufweisen.

14. Abzweigbox nach den Anspruch 1, **dadurch gekennzeichnet, dass** die Trägereinrichtung (43) für den wenigstens einen Schneidklemmkontakt (41) eine aus Isolierstoff bestehende Trägerplatte aufweist.

15. Abzweigbox nach Anspruch 14, **dadurch gekennzeichnet, dass** die Trägerplatte (43) seitlich mit Rastgliedern (46) versehen ist, die bei kontaktierten Adern (80) mit an dem anderen Gehäuseteil (11) vorgesehenen Rastöffnungen (77) unlösbar verrasten.

16. Abzweigbox nach Anspruch 14, **dadurch gekennzeichnet, dass** die Trägerplatte (43) mit Führungsmitteln versehen ist.

17. Abzweigbox nach Anspruch 1, Anspruch 1, **dadurch gekennzeichnet, dass** die Trägereinrichtung (43) mit einem zentralen Stößel (49) versehen ist, der durch eine Bohrung (51) in dem betreffenden Gehäuseteil (10) nach außen führt.

18. Abzweigbox nach Anspruch 1, **dadurch gekennzeichnet, dass** der Trägereinrichtung (43) ein Sicherungseinrichtung (56) zugeordnet ist, das die Trägereinrichtung (43) in einer Stellung hält, in der wenigstens ein Schneid-Klemmkontakt (41) bei geschlossener Abzweigbox (1) die betreffende isolierte Einzelader (80) nicht berührt.

19. Abzweigbox nach Anspruch 18, **dadurch gekennzeichnet, dass** die Sicherungseinrichtung (56) von zwei diametral gegenüberliegenden Haken gebildet sind und dass zum Entriegeln der Haken (56) an dem anderen Gehäuseteil (11) vorhandene Betätigungsglieder (78) vorgesehen sind.

20. Abzweigbox nach den Anspruch 1, **dadurch gekennzeichnet, dass** das Gehäuseteil (10), in dem die Trägereinrichtung (43) für die Schneidklemmkontakte (41) angeordnet ist, wenigstens einen Steckverbinder (13,14) trägt, der in einer Zündschutzart Ex-d ausgeführt ist.

21. Abzweigbox nach Anspruch 17, **dadurch gekennzeichnet, dass** das Gehäuseteil (10) mit der Trägereinrichtung (43) im Abstand zu dem Stößel (49) ein Werkzeugwiderlager (83) aufweist.

22. Abzweigbox nach den Anspruch 1, **dadurch gekennzeichnet, dass** das eine schalenförmige Gehäuseteil (10) in der Seitenwandanordnung (33) oder in dem Boden (32) wenigstens eine Steckdose enthält.

23. Abzweigbox nach Anspruch 1, **dadurch gekennzeichnet, dass** mit der Trägereinrichtung (43) die Sperreinrichtung (17) gekuppelt ist.

24. Abzweigbox nach Anspruch 1, **dadurch gekennzeichnet, dass** die Steckdose an jenem Gehäuseteil angeordnet ist, an dem auch die Trägereinrichtung gelagert ist.

25. Abzweigbox nach Anspruch 1, **dadurch gekennzeichnet, dass** die Sperreinrichtung zwei Schieber aufweist, von denen der eine auf der Steckdose geführten ist und der andere mit der Trägereinrichtung gekoppelt ist.

## Claims

1. Junction box (1) in accordance with protection type Ex-e
with an at least approximately tray-shaped first housing part (10, 11), which has a base (32, 58) and a side wall arrangement (33, 59), which projects upwards from the base (32, 58) and terminates at a joint face (34, 61),
with an at least approximately tray-shaped second housing part (10, 11), which has a base (32, 58) and a side wall arrangement (33, 59), which projects upwards from the base (32, 58) and terminates at a joint face (34, 61) running in a complementary manner to the joint face (34, 61) of the other housing part (10, 11),
with at least two diametrically opposed cable entry means (37, 38), which are provided on both housing parts (10, 11),
with a support means (43) movably guided in one of the housing parts (10) for at least one insulation displacement contact (41) for connecting a wire (80) of a cable (2) directed through the junction box (1),
with at least one plug socket (13, 14), and
with a blocking means (17), which is kinematically coupled to the support means (43) and which is movable back and forth between two positions depending on the position of the support means (43), wherein in one position it is located in the movement path of a plug that can be inserted into the plug socket (13, 14) and in the other position it lies outside the movement path of the plug.

2. Junction box according to Claim 1, **characterised in that** the bases (32, 58) of the two housing parts (10, 11) are substantially plane on the inside.

3. Junction box according to Claim 1, **characterised in that** the side wall arrangement (33) of one housing part (10) is extended in one region in the direction of the other housing part (11), and there projects into a corresponding recess (81) of the side wall arrangement (59).

4. Junction box according to Claim 1, **characterised in that** the wing surface (34, 61) of the two housing parts (10, 11) lies substantially in a common plane.

5. Junction box according to Claim 1, **characterised in that** the wing surfaces (34, 61) of the two housing parts (10, 11) are configured in such a manner that when the junction box (1) is assembled, the wing surfaces (34, 61) form a labyrinth-type seal, which seals the interior of the junction box (1) to the outside in accordance with protection type IP 54.

6. Junction box according to Claim 1, **characterised in that** each cable entry means (37, 38) comprises a semicircular recess in the side wall arrangement (33, 59).

7. Junction box according to Claim 6, **characterised in that** in the region of each cable entry means (37, 38) the side wall arrangement (33, 59) is reinforced in such a manner that a pocket-shaped recess (39, 66) is provided in the side wall arrangement (33, 59) in the region of the respective cable entry means (37, 38), and that a strain relief means (67) is housed in the pocket-shaped recess (39, 66).

8. Junction box according to Claim 6, **characterised in that** the cable entry means (37, 38) includes a seal (65), which is configured in the manner of a flange sleeve and is cut at one point on the periphery.

9. Junction box according to Claim 1, **characterised in that** for each individual wire (80) the wire securing means (68, 74) comprises two ribs (69, 71) projecting upwards parallel and adjacent to one another, the spacing of which is adapted to the diameter of the insulated single wires (80).

10. Junction box according to Claim 8, **characterised in that** the ribs (69, 71) are oriented parallel to a straight connecting line of the two diametrically opposed cable entry means (37, 38).

11. Junction box according to Claim 1, **characterised in that** the wire securing means (68, 74) includes a cover (74), which can be locked with the two ribs (69, 71) and which has an opening (76) for insertion of an insulation displacement contact (41).

12. Junction box according to Claim 10, **characterised in that** the cover (74) has a circumferential edge, which is arranged to centre the cover (74) on the two ribs (69, 71).

13. Junction box according to Claim 9, **characterised in that** the ribs (69, 71) have diametrically opposed guide slots (72) for the respective insulation displacement contact (41).

14. Junction box according to Claim 1, **characterised in that** the support means (43) has a support plate made of insulation material for the at least one insulation displacement contact (41).

15. Junction box according to Claim 14, **characterised in that** the support plate (43) is provided with catch members (46) on the side, which undetachably lock with snap-in openings (77) provided on the other housing part (11) when wires (80) are connected.

16. Junction box according to Claim 14, **characterised in that** the support plate (43) is provided with guide elements.

17. Junction box according to Claim 1, **characterised in that** the support means (43) is provided with a central tappet (49), which is directed to the outside through a hole (51) in the respective housing part (10).

18. Junction box according to Claim 1, **characterised in that** the support means (43) has an associated safety means (56), which holds the support means (43) in a position, in which at least one insulation displacement contact (41) does not touch the respective insulated single wire (80) when the junction box (1) is closed.

19. Junction box according to Claim 18, **characterised in that** the safety means (56) is formed by two diametrically opposed hooks, and that actuating members (78) present on the other housing part (11) are provided to unlock the hooks (56).

20. Junction box according to Claim 1, **characterised in that** the housing part (10), in which the support means (43) for the insulation displacement contacts (41) is arranged, bears at least one plug connector (13, 14), which is configured in accordance with a protection type Ex-d.

21. Junction box according to Claim 17, **characterised in that** the housing part (10) with the support means (43) has a tool abutment (83) at a distance from the tappet (49).

22. Junction box according to Claim 1, **characterised in that** one tray-shaped housing part (10) contains at least one plug socket in the side wall arrangement (33) or in the base (32).

23. Junction box according to Claim 1, **characterised in that** the blocking means (17) is coupled to the support means (43).

24. Junction box according to Claim 1, **characterised in that** the plug socket is arranged on the housing part, on which the support means is also disposed.

25. Junction box according to Claim 1, **characterised in that** the blocking means has two sliders, one of which is disposed on the plug socket and the other is coupled to the support means.

## Revendications

1. Boîte de dérivation (1) à protection antidéflagrante Ex-e, comprenant
une première partie de boîtier (10, 11) qui présente au moins approximativement une forme de coque et comprend un fond (32, 58) et un agencement de parois latérales (33, 59) s'élevant à partir du fond (32, 58) et se terminant au niveau d'une surface d'assemblage (34, 61),
une deuxième partie de boîtier (10, 11) qui présente au moins approximativement une forme de coque et comprend un fond (32, 58) et un agencement de parois latérales (33, 59) s'élevant à partir du fond (32, 58) et se terminant au niveau d'une surface d'assemblage (34, 61) qui s'étend de façon complémentaire à la surface d'assemblage (34, 61) de l'autre partie de boîtier (10, 11),
au moins deux dispositifs d'entrée de câble (37, 38) diamétralement opposés, qui sont prévus sur les deux parties de boîtier (10, 11),
un dispositif support (43), guidé de façon mobile dans l'une (10) des parties de boîtier, pour au moins un contact de borne autodénudante (41), en vue de la connexion d'un conducteur (80) d'un câble (2) traversant la boîte de dérivation (1),
au moins une prise femelle (13, 14), et
un dispositif de blocage (17) qui est couplé sur le plan cinématique au dispositif support (43) et peut être déplacé en va-et-vient entre deux positions, en fonction de la position du dispositif support (43), et qui, dans l'une de ses positions, se trouve sur le trajet de déplacement d'une fiche mâle pouvant être engagée dans la prise femelle (13, 14) et, dans l'autre position, se trouve à l'extérieur du trajet de déplacement de la fiche.

2. Boîte de dérivation selon la revendication 1, **caractérisée par le fait que** les fonds (32, 58) des deux parties de boîtier (10, 11) sont sensiblement plans sur leur face intérieure.

3. Boîte de dérivation selon la revendication 1, **caractérisée par le fait que** l'agencement de parois latérales (33) de l'une (10) des parties de boîtier est prolongé dans une zone, en direction de l'autre partie de boîtier (11), où il s'engage dans un évidement (81) correspondant de l'agencement de parois latérales (59).

4. Boîte de dérivation selon la revendication 1, **caractérisée par le fait que** les surfaces d'assemblage (34, 61) des deux parties de boîtier (10, 11) se situent sensiblement dans un plan commun.

5. Boîte de dérivation selon la revendication 1, **caractérisée par le fait que** les surfaces d'assemblage (34, 61) des deux parties de boîtier (10, 11) sont conformées de manière telle que, lorsque la boîte de dérivation (1) est assemblée, lesdites surfaces d'assemblage (34, 61) forment un joint de type à labyrinthe qui établit l'étanchéité de l'intérieur de la boîte de dérivation (1) vis-à-vis de l'extérieur, avec la protection IP 54.

6. Boîte de dérivation selon la revendication 1, **caractérisée par le fait que** chaque dispositif d'entrée de câble (37, 38) comporte un creux semi-circulaire dans l'agencement de parois latérales (33, 59).

7. Boîte de dérivation selon la revendication 6, **caractérisée par le fait que** l'agencement de parois latérales (33, 59) est renforcé dans la région de chaque dispositif d'entrée de câble (37, 38), de manière à former un évidement (39, 66) en forme de poche dans la région du dispositif d'entrée de câble (37, 38) concerné, et **par le fait qu'**un élément de décharge de traction (67) est logé dans l'évidement (39, 66) en forme de poche.

8. Boîte de dérivation selon la revendication 6, **caractérisée par le fait que** le dispositif d'entrée de câble (37, 38) comprend un joint d'étanchéité (65) qui est réalisé à la manière d'une douille à collet et dont le pourtour est coupé à un endroit.

9. Boîte de dérivation selon la revendication 1, **caractérisée par le fait que** le dispositif de maintien de conducteur (68, 74) comprend, pour chaque conducteur individuel (80), deux nervures (69, 71) s'élevant depuis le fond, parallèlement l'une à l'autre, dont l'espacement est adapté au diamètre du conducteur individuel (80) isolé.

10. Boîte de dérivation selon la revendication 8, **caractérisée par le fait que** les nervures (69, 71) sont orientées parallèlement à une droite de liaison entre les deux dispositifs d'entrée de câble (37, 38) diamétralement opposés.

11. Boîte de dérivation selon la revendication 1, **caractérisée par le fait que** le dispositif de maintien de conducteur (68, 74) comprend un couvercle (74) qui peut être encliqueté sur les deux nervures (69, 71) et présente une ouverture (76) pour engager un contact de borne autodénudante (41).

12. Boîte de dérivation selon la revendication 10, **caractérisée par le fait que** le couvercle (74) présente un bord périphérique qui est conçu pour centrer le couvercle (74) sur les deux nervures (69, 71).

13. Boîte de dérivation selon la revendication 9, **caractérisée par le fait que** les nervures (69, 71) présentent des fentes de guidage (72) diamétralement opposées pour le contact de borne autodénudante (41) concerné.

14. Boîte de dérivation selon la revendication 1, **caractérisée par le fait que** le dispositif support (43) pour le contact de borne autodénudante (41), au nombre d'au moins un, présente une plaque support en matière isolante.

15. Boîte de dérivation selon la revendication 14, **caractérisée par le fait que** la plaque support (43) est pourvue, sur les côtés, d'éléments d'encliquetage (46) qui, lorsque les conducteurs (80) sont connectés, s'enclenchent de façon indémontable dans des ouvertures d'encliquetage (77) aménagées sur l'autre partie de boîtier (11).

16. Boîte de dérivation selon la revendication 14, **caractérisé par le fait que** la plaque support (43) est dotée de moyens de guidage.

17. Boîte de dérivation selon la revendication 1, **caractérisée par le fait que** le dispositif support (43) est muni d'un poussoir (49) central qui mène à l'extérieur à travers un trou (51) réalisé dans la partie de boîtier (10) concernée.

18. Boîte de dérivation selon la revendication 1, **caractérisée par le fait qu'**il est associé au dispositif support (43) un dispositif de verrouillage (56) qui maintient le dispositif support (43) dans une position dans laquelle au moins un contact de borne autodénudante (41) n'est pas en contact avec le conducteur individuel (80) isolé concerné, lorsque la boîte de dérivation (1) est fermée.

19. Boîte de dérivation selon la revendication 18, **caractérisée par le fait que** le dispositif de verrouillage (56) est formé de deux crochets diamétralement opposés et **par le fait que** pour le déverrouillage des crochets (56), des éléments d'actionnement (78) sont prévus sur l'autre partie de boîtier (11).

20. Boîte de dérivation selon la revendication 1, **caractérisée par le fait que** la partie de boîtier (10), dans laquelle est placé le dispositif support (43) pour les contacts de borne autodénudante (41), porte au moins un connecteur à fiche (13, 14) qui est réalisé avec une protection de type Ex-d.

21. Boîte de dérivation selon la revendication 17, **caractérisée par le fait que** la partie de boîtier (10) comportant le dispositif support (43) présente un contre-appui d'outil (83) situé à distance du poussoir (49).

22. Boîte de dérivation selon la revendication 1, **caractérisée par le fait que** l'une (10) des parties de boîtier en forme de coque comporte au moins une prise femelle dans l'agencement de parois latérales (33) ou dans le fond (32).

23. Boîte de dérivation selon la revendication 1, **caractérisée par le fait que** le dispositif de blocage (17) est couplé au dispositif support (43).

24. Boîte de dérivation selon la revendication 1, **caractérisée par le fait que** la prise femelle est prévue sur la partie de boîtier sur laquelle est monté le dispositif support.

25. Boîte de dérivation selon la revendication 1, **caractérisée par le fait que** le dispositif de blocage présente deux coulisseaux dont l'un est guidé sur la prise femelle et l'autre est couplé au dispositif support.
